# NEW EUROPEAN PATENT SPECIFICATION

(11) **EP 1 763 562 B2**
(45) Date of publication and mention of the opposition decision: **26.06.2019**
(45) Mention of the grant of the patent: 17.08.2016
(21) Application number: 04814216.0
(22) Date of filing: 15.12.2004
(51) Int. Cl.: C08K 3/10, C08L 95/00, C08K 3/22, C09D 195/00, C10G 29/06, C10G 29/16

(54) **PROCESS FOR PREPARING BITUMEN COMPOSITIONS WITH REDUCED HYDROGEN SULFIDE EMISSION**
VERFAHREN ZUR HERSTELLUNG VON BITUMENMASSEN MIT VERRINGERTER SCHWEFELWASSERSTOFFEMISSION
PROCEDE DE PREPARATION DE BITUME A EMISSION D'HYDROGENE SULFURE REDUITE

(30) Priority: 31.12.2003 US 749898
(43) Date of publication of application: 21.03.2007
(73) Proprietor: TOTAL MARKETING SERVICES, 92800 Puteaux (FR)
(72) Inventor: BURAS, Paul, J., West University Place, TX 77005 (US); LEE, William, Humble, TX 77346 (US); BUTLER, James, R., Friendswood, TX 77546 (US)
(74) Representative: August Debouzy
(86) International application number: PCT/US2004/042005
(87) International publication number: WO 2005/065177

(56) References cited:
- EP-A1- 0 421 853
- EP-A1- 1 081 193
- EP-A1- 1 205 520
- EP-A1- 1 205 520
- EP-A2- 0 402 573
- WO-A1-01/68774
- DD-A1- 205 177
- GB-A- 412 498
- GB-A- 2 137 633
- JP-A- H08 259 821
- JP-A- 2001 081 325
- US-A- 3 960 585
- US-A- 3 960 585
- US-A- 5 104 916
- US-A- 5 348 994
- US-A1- 2002 068 776
- US-A1- 2003 073 761
- US-A1- 2003 073 761
- US-B1- 6 180 697
- US-B1- 6 441 065
- WALKER R ET AL: "The formation of pyrophoric iron sulphide from rust", SURFACE AND COATINGS TECHNOLOGY, ELSEVIER, AMSTERDAM, NL, vol. 31, no. 2, 1 August 1987 (1987-08-01) , pages 183-197, XP025778139, ISSN: 0257-8972, DOI: 10.1016/0257-8972(87)90071-5 [retrieved on 1987-08-01]
- ROBERT WALKER ET AL: "Deactivation of Pyrophoric Iron Sulfides", IND. ENG. CHEM. RES., vol. 36, 1 January 1997 (1997-01-01), pages 3662-3667, XP55006767,
- SHELL Bitumen Handbook: "5th edition", 2003 pages 61-79,
- R. WALKER ET AL: "Deactivation of Pyrophoric Iron Sulfides", IND. ENG, CHEM, RES, vol. 36, 1 January 1997 (1997-01-01), pages 3662-3667, XP055006767,

## Description

### Field of the Invention

The present invention is related to hydrocarbon-based binders, such as bitumens, asphalts and tars which are particularly useful as industrial coatings and road bitumens, or the like. It relates more particularly to processes for obtaining bitumens or bitumens that have reduced hydrogen sulfide evolution.

### Background of the Invention

The use of bitumen (asphalt) compositions in preparing aggregate compositions (including, but not just limited to, bitumen and rock) useful as road paving material is complicated by at least three factors, each of which imposes a serious challenge to providing an acceptable product. First, the bitumen compositions must meet certain performance criteria or specifications in order to be considered useful for road paving. For example, to ensure acceptable performance, state and federal agencies issue specifications for various bitumen applications including specifications for use as road pavement. Current Federal Highway Administration specifications require a bitumen (asphalt) product to meet defined parameters relating to properties such as viscosity, stiffness, penetration, toughness, tenacity and ductility. Each of these parameters defines a critical feature of the bitumen composition, and compositions failing to meet one or more of these parameters will render that composition unacceptable for use as road pavement material.

Conventional bitumen compositions frequently cannot meet all of the requirements of a particular specification simultaneously and, if these specifications are not met, damage to the resulting road can occur, including, but not necessarily limited to, permanent deformation, thermally induced cracking and flexural fatigue. This damage greatly reduces the effective life of paved roads.

In this regard, it has long been recognized that the properties of conventional bitumen compositions can be modified by the addition of other substances, such as polymers. A wide variety of polymers have been used as additives in bitumen compositions. For example, copolymers derived from styrene and conjugated dienes, such as butadiene or isoprene, are particularly useful, since these copolymers have good solubility in bitumen compositions and the resulting modified-bitumen compositions have good rheological properties.

It is also known that the stability of polymer-bitumen compositions can be increased by the addition of crosslinking agents (vulcanizing agents) such as sulfur, frequently in the form of elemental sulfur. The addition of extraneous sulfur is used to produce the improved stability, even though bitumens naturally contain varying amounts of native sulfur.

Thus, there is known a process for preparing a bitumen-polymer composition consisting of mixing a bitumen, at 266-446°F (130-230°C), with 2 to 20% by weight of a block or random copolymer, having an average molecular weight between 30,000 and 500,000. The resulting mixture is stirred for at least two hours, and then 0.1 to 3% by weight of sulfur relative to the bitumen is added and the mixture agitated for at least 20 minutes. The quantity of added sulfur may be 0.1 to 1.5% by weight with respect to the bitumen. The resulting bitumen-polymer composition is used for road-coating, industrial coating, or other industrial applications.

Similarly, there is also known an asphalt (bitumen) polymer composition obtained by hot-blending asphalt with 0.1 to 1.5% by weight of elemental sulfur and 2 to 7% by weight of a natural or synthetic rubber, which can be a linear butadiene/styrene copolymer. A process is additionally known for preparing a rubber-modified bitumen by blending rubber, either natural or synthetic, such as styrene/butadiene rubber, with bitumen at 293-365°F (145-185°C), in an amount up to 10% by weight based on the bitumen, then adjusting the temperature to 257-400°F (125-204°C), and intimately blending into the mix an amount of sulfur such that the weight ratio of sulfur to rubber is between 0.01 and 0.9. A catalytic quantity of a vulcanization-accelerator is then added to effect vulcanization. A critical nature of the sulfur to rubber ratio is sometimes reported, for instance that weight ratios of sulfur to rubber of less than 0.01 gives modified bitumen of inferior quality.

The second factor complicating the use of bitumen compositions concerns the viscosity stability of such compositions under storage conditions. In this regard, bitumen compositions are frequently stored for up to 7 days or more before being used and, in some cases, the viscosity of the composition can increase so much that the bitumen composition is unusable for its intended purpose. On the other hand, a storage stable bitumen composition would provide for only minimal viscosity increases and, accordingly, after storage it can still be employed for its intended purpose.

Asphaltic concrete, typically including asphalt and aggregate, asphalt compositions for resurfacing asphaltic concrete, and similar asphalt compositions must exhibit a certain number of specific mechanical properties to enable their use in various fields of application, especially when the asphalts are used as binders for superficial coats (road surfacing), as asphalt emulsions, or in industrial applications. (The term "asphalt" is used herein interchangeably with "bitumen." Asphaltic concrete is asphalt used as a binder with appropriate aggregate added, typically for use in roadways.) The use of asphalt or asphalt emulsion binders either in maintenance facings as a surface coat or as a very thin bituminous mix, or as a thicker structural layer of bituminous mix in asphaltic concrete, is enhanced if these binders possess the requisite properties such as desirable levels of elasticity and plasticity.

An additional concern in the production of road grade asphalt (road grade asphalt is any asphalt intended for road paving whether or not it is modified with polymer), roofing asphalt and other bitumens is that occasionally undesirable levels of hydrogen sulfide (H₂S) are generated during the production, storage and application of the asphalt. It would be desirable if the level of H₂S could be reduced or eliminated in these cases. Hydrogen sulfide is a colorless, toxic gas with an offensive stench and is said to smell like rotten eggs. H₂S is hazardous to workers and also causes formation of pyrophoric iron pyrite in storage tanks.

As can be seen from the above, methods are known to improve the road asphalt. The needed elements for the commercial success of any such process include keeping the process as simple as possible, reducing the cost of the ingredients, and utilizing available asphalt cuts from a refinery without having to blend in more valuable fractions. In addition, the resulting asphalt composition must meet the above-mentioned governmental physical properties and environmental concerns, such as the reduction of H₂S. Thus, it is a goal of the industry to reduce the hydrogen sulfide release from the asphalt without sacrificing any of the other elements and improving the properties of the asphalt as much as possible.

### Summary of the Invention

The invention provides a method for preparing a polymer-modified asphalt having reduced hydrogen sulphide emissions according to claim 1.

### Detailed Description of the Invention

It has been discovered that significant reductions in H₂S emissions during production, storage, and shipping of asphalt can be accomplished by the addition of alkanolamines (such as ethanolamine), dimetallic amines, and/or inorganic metal salts.

As used herein, the term "bitumen" (sometimes referred to as "asphalt") refers to all types of bitumens, including those that occur in nature and those obtained in petroleum processing. The choice of bitumen will depend essentially on the particular application intended for the resulting bitumen composition. Bitumens that can be used can have an initial viscosity at 140°F (60°C) of 600 to 3000 poise (60 to 300 Pa-s) depending on the grade of asphalt desired. The initial penetration range (ASTM D5) of the bitumen at 77°F (25°C) is 20 to 320 dmm, and can alternatively be 50 to 150 dmm, when the intended use of the bitumen composition is road paving. The quantities of asphalt typically employed for the methods of this invention will vary widely, but in one non-limiting embodiment of the invention, may be at least about 5 pounds for roofing applications. In another case, it may be at least about 50,000 tons for paving applications.

The term "desired Rheological Properties" refers primarily to the SUPERPAVE asphalt binder specification designated by AASHTO as SP-1. Additional asphalt specifications can include viscosity at 140°F (60°C) of from 1600 to 4000 poise (160-400 Pa-s) before aging; a toughness of at least 110 inch-pound (127 cm-kilograms) before aging; a tenacity of at least 75 inch-pound (86.6 cm-kilograms) before aging ; and a ductility of at least 25 cm at 39. 2°F (4°C) at a 5 cm/min. pull rate after aging.

Viscosity measurements are made by using ASTM test method D2171. Ductility measurements are made by using ASTM test method D113. Toughness and tenacity measurements are made by a Benson Method of Toughness and Tenacity, run at 20 inches/minute (50.8 cm/minute) pull rate with a 1/8 inch (2.22 cm) diameter ball.

By "storage stable viscosity" it is meant that the bitumen composition shows no evidence of skinning, settlement, gelation, or graininess and that the viscosity of the composition does not increase by a factor of four or more during storage at 325±0.5°F (163±2.8°C) for seven days. In one non-limiting embodiment of the disclosure, the viscosity does not increase by a factor of two or more during storage at 325°F (163°C) for seven days. In another non-limiting embodiment of the disclosure, the viscosity increases less than 50% during seven days of storage at 325°F (163°C). A substantial increase in the viscosity of the bitumen composition during storage is not desirable due to the resulting difficulties in handling the composition and in meeting product specifications at the time of sale and use.

The term "aggregate" refers to rock and similar material added to the bitumen composition to provide an aggregate composition suitable for paving roads. Typically, the aggregate employed is rock indigenous to the area where the bitumen composition is produced. Suitable aggregate includes granite, basalt, limestone, and the like.

As used herein, the term "asphalt cement" refers to any of a variety of substantially solid or semi-solid materials at room temperature that gradually liquify when heated. Its predominant constituents are bitumens, which may be naturally occurring or obtained as the residue of refining processing. The asphalt terms used herein are well known to those skilled in the art. For an explanation of these terms, reference is made to the booklet SUPERPAVE Series No.1 (SP-1), 1997 printing, published by the Asphalt Institute (Research Park Drive, P. O. Box 14052, Lexington, KY 40512-4052), which is hereby incorporated by reference in its entirety. For example, Chapter 2 provides an explanation of the test equipment, terms, and purposes. Rolling Thin Film Oven (RTFO) and Pressure Aging Vessel (PAV) are used to simulate binder aging (hardening) characteristics. Dynamic Shear Rheometers (DSR) are used to measure binder properties at high and intermediate temperatures. This is used to predict permanent deformation or rutting and fatigue cracking. Bending Beam Rheometers (BBRs) are used to measure binder properties at low temperatures. These values predict thermal or low temperature cracking. The procedures for these experiments are also described in the above-referenced SUPERPAVE booklet.

Asphalt grading is given in accordance with accepted standards in the industry as discussed in the above-referenced Asphalt Institute booklet. For example, pages 62-65 of the booklet include a table entitled Performance Graded Asphalt Binder Specifications. The asphalt compositions are given performance grades, for example, PG 64-22. The first number, 64, represents the average 7-day maximum pavement design temperature in °C. The second number, -22, represents the minimum pavement design temperature in °C. Other requirements of each grade are shown in the table. For example, the maximum value for the PAV-DSR test, (°C) for PG 64-22 is 25°C.

In accordance with one non-limiting embodiment of the present disclosure, an asphalt composition is prepared by adding the asphalt or bitumen to a mixing tank that has stirring means. The asphalt is added and stirred at elevated temperatures. Stirring temperatures depend on the viscosity of the asphalt and can range up to 500 °F (260°C). Asphalt products from refinery operations are well known in the art. For example, asphalts typically used for this process are obtained from deep vacuum distillation of crude oil to obtain a bottom product of the desired viscosity or from a solvent deasphalting process that yields a demetallized oil, a resin fraction and an asphaltene fraction. Some refinery units do not have a resin fraction. These materials or other compatible oils of, greater than 450°F (232°C) flash point may be blended to obtain the desired viscosity asphalt. In polymer-modified asphalt (PMA) processing, care must be taken in not subjecting the asphalt/polymer composition to elevated temperatures for too long to avoid thermal degradation of the polymer.

As noted, it has been discovered that certain H₂S scavengers have been found useful in preventing or inhibiting the evolution or emission of H₂S from asphalt elastomer mixtures during processing. It will be appreciated that it is not necessary for the H₂S scavengers of this invention to completely eliminate the evolution or emission of H₂S for the invention to be a success, since in some cases this may be impossible. The goal is to at least reduce the H₂S evolution to acceptable levels. In one non-limiting embodiment of the disclosure, the acceptable level is the current level acceptable to OSHA. In another non-limiting embodiment of the disclosure, an acceptable level is 50 ppm or below, and in an alternate non-limiting embodiment of the disclosure, an acceptable level is 10 ppm or lower. It will also be noted that just because a compound has been previously identified as a H₂S scavenger in one context does not mean that it will function well in the present method, as will be demonstrated. It has been discovered that alkanolamines and dimetallic amines are useful H₂S scavengers for road asphalt. Suitable alkanolamines include, but are not necessarily limited to, ethanolamine. Suitable dimetallic amines include, but are not necessarily limited to, Dimetallic Amine available from Betz Laboratories.

In the case where the H₂S scavenger is an alkanolamine and/or a dimetallic amine, the scavenger may be added in an amount ranging from about 0.005 to about 2.0 wt% based on the mixture. In another non-limiting embodiment of the disclosure, the amount may range from about 0.01 to about 1.0 wt%.

Inorganic and organic metal salt H₂S scavengers have been found especially effective to reduce the evolution of H₂S. The metal of the metal salt H₂S scavenger may be zinc, cadmium, mercury, copper, silver, nickel, platinum, iron, magnesium, and mixtures thereof. The organic and inorganic salt forms of these metals include, but are not necessarily limited to, carboxylates, oxides, nitrates, carbonates, hydrates, halides, phosphates, perchlorate, sulfates, sulphonates, and the like and mixtures thereof. Specific examples of suitable organic metals salts include, but are not necessarily limited to, zinc stearate, calcium palmitat, magnesium citrate, and the like and mixtures thereof. In one non-limiting embodiment of the invention, the metal salt H₂S scavenger is zinc oxide, magnesium oxide and/or copper oxide. The species zinc oxide is often referred to herein as a non-limiting example, and is not intended to exclude other suitable metal salt H₂S scavengers.

It has also been particularly discovered that an excess of metal salt (e.g. zinc oxide) from what is normally used may inhibit the evolution or formation of H₂S. Generally, in one non-limiting embodiment, the amount of inorganic or organic metal salt H₂S scavenger should be minimized but sufficient (up to about 3 wt%) to reduce the hydrogen sulfide to the desired levels. In one non-limiting embodiment of the invention, the inorganic or organic metal salt H₂S scavenger ranges from about 0.05 to about 2 wt% based on the mixture of asphalt and polymer. In another case, the amount of zinc oxide is at least 10 times that normally used.

In one alternate, non-limiting embodiment of the disclosure, at least a portion of, or optionally all of, a conventional sulfur-containing derivative (e. g. mercaptobenzothiazole (MBT), thiurams, dithiocarbamates, mercaptobenzimidazole (MBI) and/or elemental sulfur crosslinker for use in asphalts is replaced with an alkyl polysulfide and/or an ester polysulfide to reduce the emission of H₂S from the PMA during processing. Suitable specific alkyl polysulfides used in this invention include, but are not necessarily limited to TPS-32 di-tert-dodecyl polysulfide from Atofina Chemicals Inc. Suitable specific ester polysulfides used in this invention include, but are not necessarily limited to, VPS 17 sulfurized fatty ester available from Atofina Chemicals Inc. In another non-limiting embodiment of the disclosure, the total amount of crosslinker and sulfide is present in an amount ranging from about 0.01 to about 0.6 wt% active ingredients, based on the weight of the asphalt. In an alternative, non-limiting embodiment of the disclosure, at least 50 wt% of the crosslinker that would be normally added is replaced by a sulfide in this invention. At least partial replacement of the crosslinker with sulfide can have the effect of reducing the amount of other H₂S scavenger used.

In general, in one non-limiting embodiment of the invention, if the asphalt is modified with a polymer, they may emit more H₂S if they are cross linked.

The methods and compositions of this invention will be further illustrated with respect to particular Examples that are only intended to more fully illuminate the invention and not limit it in any way.

### EXAMPLES 1-6

The need for the invention arose when H₂S vapors in the range of 250-750 ppm were detected emanating from a mix tank where an asphalt/polymer mixture was being blended and milled following addition of ZnO/MBT/S-based crosslinking agent available from Atofina Petrochemicals, Inc. The crosslinking agent was blended in a concentrate with asphalt in the tank and pumped to a blend/let-down tank for crosslinking reaction and cure. There was no H₂S abatement on the asphalt/polymer mix tank. Subsequent testing of the PMA storage tank and loading facility after treatment with zinc oxide indicated H₂S levels were at or below a 10 ppm level considered to be safe. Initially, the Loss-on-Heating (LOH) and smoke properties for several H₂S scavengers was evaluated.

A 0.1 wt% blend of each of the H₂S scavengers in a base asphalt were tested for smoke and LOH according to standard practices. The results are presented in Table I.

**TABLE I**

| Smoke and LOH Test Results for Asphalt/ H₂S Scavengers Formulations | | | | | | |
|---|---|---|---|---|---|---|
| Ex. | 1 | 2 | 3 | 4 | 5 | 6 |
| Scavenger Product | Betz Dimetallic Amine | Unichem U-I-7586 | Betz Prosweet | Baker Petrolite | Enichem EC 5492A | Enichem EC 9266A |
| Type | dimetallic amine | KOH/amine | triazine | amine/aldehyde | amine | iron carboxylate |
| LOH wt%¹ | 0.1 | 0.1 | 0.1 | 0.1 | 0.1 | 0.1 |
| Smoke² | 0.066 | 0.077 | 0.254 | 0.052³ | 0.268 | 0.377 |
| ¹Wt% loss vs. neat asphalt. | | | | | | |
| ² "Smoke" - material caught on filters, in grams. | | | | | | |
| ³ Baker Petrolite product began visibly smoking immediately upon addition. | | | | | | |

All of the asphalt/scavenger blends lost 0.1 wt% during RTFO aging. This equates to the total amount of H₂S scavenger added, although it should be understood that the weight loss could also have been due to some other asphalt component since no blank was run. Thus, there was no difference between the screened scavengers in LOH.

The Unichem U-1-7586 ethanolamine had smoking characteristics most similar to the Betz Dimetattic Amine product. The Betz Prosweet and Enichem EC 5492A and Enichem EC 9266 scavengers had smoke generation properties 4 to 5 times that for the Betz Dimetallic Amine or Unichem scavengers. Although the measured grams of smoke residue were low for the Baker Petrolite sample, this H₂S scavenger appeared to have "flashed off" from the asphalt immediately upon addition with generation of considerable visible smoke. It must thus be concluded that not all known H₂S scavengers are suitable for use in asphalt. The Unichem ethanolamine was selected to be tested in asphalt formulations for total H₂S emissions.

### EXAMPLES 7-15

Several variations in asphalt formulations were laboratory tested for H₂S emissions. The variations included those in Table II:

**TABLE II**

| | Identity of examples 7-15 for H₂S Emissions Testing |
|---|---|
| Ex. | Composition - Preceding numbers are wt% |
| 7 | Base asphalt |
| 8 | Base asphalt with 0.40 ZnO/MBT/S-based crosslinking agent |
| 9 | Base asphalt with 0.06 ZnO/0.06 MBT/0.12 S |
| 10 | Base asphalt with 0.60 ZnO/0.06 MBT/0.12 S |
| 11 | Base asphalt with 0.06 ZnO/0.06 MBT/0.12 S with 0.1 wt% Betz Dimetallic Amine |
| 12 | Base asphalt with 0.06 ZnO/0.06 MBT/0.12 S with 0.1 wt% Unichern U-1 7585 Ethanolamine |
| 13 | Base asphalt with 0.06 ZnO/0.06 MBT/0.12 S at 280°F (138°C) |
| 14 | Base asphalt with 0.06 ZnO/0.06 MBT/0.71 VPS 17 polysulfide. VPS 17 polysulfide is a sulfurized fatty ester available from Atofina Chemicals Inc. |
| 15 | Base asphalt with 0.06 Zn0/0.10 DTDM - 4,4'-dithiodimorpholine |

### Results

The results of the titrations for H₂S for each of the nine tested formulations are presented in Table III. It should be noted that the reported concentrations of H₂S are an accumulation of trapped/collected H₂S for the duration of the experiment and are not a representation of the actual H₂S present in the headspace gas at any given time. The ppm calculations are based on starting asphalt weight and are used as relative comparisons of applied treatments.

The ZnO/MBT/S-based crosslinking agent crosslinker concentration (Example 8) was figured on delivery of active 0.06 ZnO/0.06 MBT/0.12 S active crosslinking agent, equivalent active ingredient concentrations to a currently used dry form. The ZMBT/DTDM concentration of Example 15 was taken from previously used values in other work. The VPS 17 concentration in Example 14 was based on a delivery of 0.12 wt% total sulfur. The 280°F (138°C) low temperature Example 13 was selected because this is the lowest temperature at which asphalt can be effectively pumped in many refineries.

It should be noted that the total reported H₂S concentration was the cumulative amount scrubbed out of the vapor. This was not representative of the emissions at any given point during the crosslinker addition step, but was used as a relative measure of the total H₂S emission potential for comparisons of the Examples to each other. The concentrations are expressed as ppm based on the weight of liquid asphalt *(i.e.,* grams H₂S evolved per 106 grams of asphalt). This is not equivalent to the vapor space concentration.

**TABLE III**

| Measured H₂S Emissions of Selected Asphalt Formulations | | | | | | | | | | |
|---|---|---|---|---|---|---|---|---|---|---|
| | Ex. Units | 7 | 8 | 9 | 10 | 11 | 12 | 13 | 14 | 15 |
| Asphalt | Wt% | 100 | * | * | * | * | * | * | * | * |
| ZnO/MBT/S | Wt% | | 0.40 | | | | | | | |
| Betz Amine | Wt% | | | | | 0.1 | | | | |
| Unichem | Wt% | | | | | | 0.01 | | | |
| ZnO | Wt% | | | 0.06 | 0.60 | 0.06 | 0.06 | 0.06 | 0.06 | |
| MBT | Wt% | | | 0.06 | 0.06 | 0.06 | 0.06 | 0.06 | 0.06 | |
| Sulfur | Wt% | | | 0.12 | 0.12 | 0.12 | 0.12 | 0.12 | | |
| ZMBT | Wt% | | | | | | | | | 0.05 |
| DTDM | Wt% | | | | | | | | | 0.10 |
| VPS-17 | Wt% | | | | | | | | 0.71 | |
| Temp. | °F | 350 | 350 | 350 | 350 | 350 | 350 | 280 | 350 | 350 |
| Temp. | °C | 177 | 177 | 177 | 177 | 177 | 177 | 138 | 177 | 177 |
| H₂S | ppm | <1 | 1701 | 519 | <1 | <1 | <1 | <1 | <1 | 407 |
| * The balance is asphalt | | | | | | | | | | |

The base asphalt (Example 7) did not show measurable H₂S, and was not considered a significant source of H₂S emission under the conditions of this experiment. The head space in asphalt tanks is known to have high concentrations of hydrogen sulfide and must be treated to remove hydrogen sulfide before release to the environment. Example 8 with ZnO/MBT/S-based crosslinker and Example 9 with dry equivalent ZnO/MBT/S addition both had significant contributions to H₂S emissions. It is not known why there is significantly more H₂S emitted with this crosslinker than with the dry equivalent, when both crosslinking formulations have equivalent ZnO/MBT/S active ingredients (concentrations). It is possible that the ZnO, which helps tie up the sulfur and reduces H₂S is not dissolved/activated from the EVA (ethylene-vinyl acetate) pellet of crosslinker as quickly as the solids-suspension formulation of the dry equivalent. There was also significant H₂S given off during crosslinking with ZMBT/DTDM in Example 15.

It was discovered that treatment with ten times the normal amount of ZnO (Example 10), or the Betz Dimetallic Amine H₂S scavenger (Example 11) or the Unichem U-1-7585 ethanolamine (Example 12) eliminates measurable H₂S emissions in this experiment. However, when asphalt is heated as it is loaded into the truck, hydrogen sulfide is released from theamine/hydrogen sulfide salt. The reduction in the crosslinker addition/mix temperature to 280°F (138°C) also eliminated measurable H₂S. However, there are time constraints in operationally lowering the asphalt: temperature below the normal storage temperatures, but some temperature reduction could be considered.

Use of VPS-17 polysulfide (equivalent sulfur content of 0.12 wt%) brought the total H₂S emission to near tolerance levels. The measured 81 ppm concentration of H₂S was collected over a 3 hour period and would most likely be below the limit of 50 ppm at any given time during the crosslinker addition. Certainly the H₂S level could be minimized at any given time by control of the polysulfide addition rate.

### EXAMPLES 16-20

Zinc oxide has been shown to be effective in treating asphalt for H₂S. It was surprisingly discovered that CaO does not reduce H₂S to levels measured after treatment with ZnO. An asphalt from vacuum tower bottoms (VTB) was also treated with MgO or CuO and tested for H₂S emissions. The results are shown in Table IV. H₂S measurements (in ppm) are representative of the total H₂S collected during the experiment and are calculated based on total asphalt weight. The results are not representative of vapor space concentration at any given time.

**TABLE IV**

| H₂S titration results for DEMEX Charge treated with ZnO and Cao. | | |
|---|---|---|
| | Units | H₂S |
| VTB asphalt charge | ppm* | 28 |
| VTB asphalt Charge + 0.1% ZnO | ppm* | <1 |
| VTB asphalt Charge + 0.1% CaO | ppm* | 36 |
| VTB asphalt Charge + 0.1% MgO | ppm* | <1 |
| VTB asphalt Charge + 0.1% CuO | ppm* | <1 |

The asphalt sample treated with ZnO had H₂S levels below the 1 ppm detection limits of the test. Treatment of the asphalt sample with either MgO or CuO resulted in levels of collected H₂S below the 1 ppm detection limit of the titration method used for this test. The asphalt sample treated with 0. 1wt% CaO had measurable H₂S at 36 ppm, above the measured H₂S of the untreated asphalt sample at 28 ppm.

Calcium has the lowest electronegativity of the metals used in this experiment. CaS is known to decompose in even weak acids, releasing H₂S-ZnS is significantly more stable. CaO is not a viable option for replacement of ZnO for treatment of H₂S in asphalt base stocks. MgO and CuO appear to offer the same or similar levels of H₂S reduction as ZnO in asphalt. Thus, treatment of asphalt with 0.1 wt% CaO does not result in a decrease in the H₂S emission; treatment of the asphalt with 0.1 wt% ZnO, 0.1 wt% MgO, or 0.1 wt% CuO lowers H₂S emissions below the titration detection limit of 1 ppm.

In the foregoing specification, the invention has been described with reference to specific embodiments thereof, and has been demonstrated as effective in providing methods for preparing asphalt and asphalt polymer compositions with reduced H₂S emissions or evolution. However, it will be evident that various modifications and changes can be made to the method without departing from the broader spirit or scope of the invention as set forth in the appended claims. Accordingly, the specification is to be regarded in an illustrative rather than a restrictive sense. For example, specific combinations or amounts of asphalt, polymer, inorganic or organic metal salt H₂S scavengers and other components falling within the claimed parameters, but not specifically identified or tried in a particular asphalt system, are anticipated and expected to be within the scope of this invention. Specifically, the method and discovery of the invention are expected to work with H₂S scavengers other than those exemplified herein.

The H₂S scavengers of this invention can also be used to reduce H₂S evolution in asphalts used to build roads, seal roofs, and other applications. They can also function to reduce the formation of pyrophoric iron pyrite in vessels and tanks where asphalt is stored. Recycled asphalts can also be treated with these scavengers, and aggregates at least partially coated with asphalts can be advantageously treated with these scavengers.

## Claims

1. Method for preparing a polymer-modified asphalt having reduced hydrogen sulfide emissions, comprising
a. heating a mixture of asphalt and a vinyl aromatic/conjugated diene elastomeric polymer;
b. adding a crosslinker to the mixture, where the crosslinker is elemental sulfur; and,
c. adding an inorganic or organic metal salt H₂S scavenger to the polymer-modified asphalt in an amount ranging from 0.05 to 3 wt% based on the asphalt and polymer mixture, where the metal of the metal salt H₂S scavenger is selected from the group consisting of zinc, cadmium, mercury, copper, silver, nickel, platinum, iron, magnesium, and mixtures thereof.

2. Method according to Claim 1, **characterized in that** the inorganic or organic metal salt is selected from the group consisting of zinc oxide, cadmium oxide, copper oxide, magnesium oxide and mixtures thereof.

3. Method according to Claim 1, **characterized in that** the inorganic or organic metal salt H₂S scavenger is selected from the group consisting of carboxylates, oxides, and mixtures thereof.

## Patentansprüche

1. Verfahren zur Herstellung eines polymermodifizierten Asphalts, der verminderte Schwefelwasserstoffemissionen aufweist, umfassend
a. Erwärmen einer Mischung aus Asphalt und einem vinylaromatischen/konjugierten dienischen elastischen Polymer;
b. Zugeben eines Quervernetzers zur Mischung, wobei der Quervernetzer elementarer Schwefel ist; und
c. Zugeben eines Schwefelwasserstofffängers (H₂S-Scavengers) aus anorganischem oder organischem Metallsalz zu dem polymermodifizierten Asphalt in einer Menge im Bereich von 0,05 bis 3 Gew.-%, bezogen auf den Asphalt und die Polymermischung, wobei das Metall des Schwefelwasserstofffängers aus Metallsalz aus der Gruppe ausgewählt ist, die aus Zink, Cadmium, Quecksilber, Kupfer, Silber, Nickel, Platin, Eisen, Magnesium und Mischungen davon besteht.

2. Verfahren nach Anspruch 1, **dadurch gekennzeichnet, dass** das anorganische oder organische Metallsalz aus der Gruppe ausgewählt ist, die aus Zinkoxid, Cadmium(II)-oxid, Kupferoxid, Magnesiumoxid und Mischungen davon besteht.

3. Verfahren nach Anspruch 1, **dadurch gekennzeichnet, dass** der Schwefelwasserstofffänger aus anorganischem oder organischem Metallsalz aus der Gruppe ausgewählt ist, die aus Carboxylaten, Oxiden und Mischungen davon besteht.

## Revendications

1. Procédé de préparation d'un asphalte modifié par polymère présentant des émissions réduites de sulfure d'hydrogène, comprenant
a. le chauffage d'un mélange d'asphalte et d'un polymère élastomère de vinyle aromatique/diène conjugué;
b. l'ajout d'un agent de réticulation au mélange, où l'agent de réticulation est du soufre élémentaire ; et,
c. l'ajout d'un piégeur de H₂S de type sel métallique inorganique ou organique à l'asphalte modifié par polymère en une quantité de 0,05 à 3% en poids sur la base du mélange d'asphalte et de polymère, où le métal du piégeur de H₂S de type sel métallique est choisi dans le groupe constitué du zinc, du cadmium, du mercure, du cuivre, de l'argent, du nickel, du platine, du fer, du magnésium et de leurs mélanges.

2. Procédé selon la revendication 1, **caractérisé en ce que** le sel métallique inorganique ou organique est choisi dans le groupe constitué de l'oxyde de zinc, de l'oxyde de cadmium, de l'oxyde de cuivre, de l'oxyde de magnésium et de leurs mélanges.

3. Procédé selon la revendication 1, **caractérisé en ce que** le piégeur de H₂S de type sel métallique inorganique ou organique est choisi dans le groupe constitué des carboxylates, des oxydes et de leurs mélanges.
